# DEMANDE DE BREVET EUROPEEN

(11) **EP 1 968 319 A1**
(43) Date de publication de la demande: **10.09.2008**
(21) Numéro de dépôt: 07123216.9
(22) Date de dépôt: 14.12.2007
(51) Int. Cl.: H04N 7/173, H04N 5/445, H04N 5/44, H04N 7/24

(54) **Service associe a une diffuson de contenu numerique**

(30) Priorité: 19.12.2006 FR 0611068
(71) Demandeur: France Télécom, 75015 Paris (FR)
(72) Inventeur: Chami, Ahmad, 35700 Rennes (FR); Geslin, Franck, 35000 Rennes (FR)
(74) Mandataire: Cabinet Plasseraud

(57) **Abrégé**

Dans un réseau, qui comprend une entité de diffusion (11) de contenus numériques et un serveur (10) stockant des données auxiliaires à associer à au moins un contenu numérique, est diffusé à des terminaux au moins un contenu numérique. Au moins une commande de terminal est diffusée dans ce contenu numérique. Au niveau d'un terminal (14) du réseau, on reçoit (21) le contenu numérique diffusé ; on extrait (22) ladite commande de terminal dudit contenu numérique reçu ; et on exécute (23, 24) la commande de terminal en requérant auprès dudit serveur les données auxiliaires associées au contenu numérique.

## Description

La présente invention se rapporte à la gestion de la diffusion à des terminaux de contenus numériques selon une diffusion générale, comme par exemple la diffusion de programmes de télévision.

Différents types de réseau de télécommunications permettent de diffuser des contenus numériques correspondant à des programmes de chaînes de télévision. On peut notamment prévoir de proposer une telle diffusion selon un protocole de type DVB (pour 'Digital Video Broadcasting', en anglais).

Il est également possible de diffuser de tels contenus numériques sur des réseaux qui se basent sur des protocoles de type ADSL, pour 'Asymetric Digital Subscriber Line'. Dans ce cas, on peut délivrer à des abonnés des chaînes de télévision via leur ligne téléphonique.

Dans le but d'enrichir la diffusion de ces programmes de télévision, il peut être avantageux d'y associer des données auxiliaires qui peuvent par exemple compléter une séquence d'images diffusées par des informations additionnelles. Tel est le cas notamment, lorsqu'il est prévu d'offrir à des terminaux la possibilité d'afficher de manière synchrone des sous-titres à une séquence d'images.

On peut également citer comme exemple de ce type, le contexte du téléachat, dans lequel il est prévu que le terminal d'un utilisateur affiche une séquence d'images de télévision classique du programme de la chaîne de téléachat tout en surimprimant des données auxiliaires associées à cette séquence d'images de télévision. Les données auxiliaires peuvent alors correspondre à un texte indiquant des informations relatives aux objets en vente à ce moment là sur la chaîne. Ce texte est alors affiché en surimpression sur les images diffusées par la chaîne de télévision de téléachat. De telles données auxiliaires peuvent notamment indiquer des caractéristiques de l'objet en vente.

Ainsi, les informations relatives aux objets en vente sont affichées en association avec la séquence d'images de télévision, puisque, lorsqu'un autre objet est en vente à l'écran, ces informations doivent être modifiées de sorte à indiquer des caractéristiques relatives à ce nouvel objet en cours de présentation.

De telles informations auxiliaires peuvent également offrir à l'utilisateur d'un terminal un certain niveau d'interactivité. Par exemple, toujours dans le contexte du téléachat, des données auxiliaires associées à une séquence d'images de téléachat peuvent permettre à un utilisateur de saisir une commande d'achat de l'objet en cours de présentation sur l'écran de son terminal.

En associant ainsi des données auxiliaires à un contenu numérique, on est en mesure d'enrichir les services de télécommunications offerts dans le réseau de diffusion considéré.

La norme 'Digital Video Broadcasting' (DVB) (ETSI TS 102 823 V1.1.1 2005-11) permet d'effectuer de manière logiquement séparée la transmission du contenu numérique du programme de télévision et la transmission des données auxiliaires qui lui sont associées, tout en permettant d'associer correctement dans le temps ces deux transmissions de façon à ce que le terminal affiche les données auxiliaires au moment opportun.

Selon une norme de ce type, la transmission de contenu numérique et la transmission des données auxiliaires associées sont préalablement multiplexées.

Ce type de norme requiert un traitement qui peut être complexe à la réception pour gérer et afficher ces données auxiliaires, et, de ce fait, exige des terminaux coûteux.

En outre, les données auxiliaires sont alors diffusées avec le programme de télévision et sont donc transmises à tous les terminaux du réseau de diffusion. Dans de telles conditions, il n'est pas aisé d'envisager de personnaliser de telles données auxiliaires par terminal.

Il est également complexe de gérer de telles données auxiliaires en temps réel, comme cela peut être requis au cours de la gestion d'un jeu télévisé multi joueurs dont le score moyen évolue au cours du temps selon les réponses données.

En outre, dans le cadre de l'utilisation d'une norme de diffusion de ce type, il existe une forte dépendance entre la gestion du programme de télévision et le fournisseur d'un service interactif qui lui est associé puisque l'insertion des données auxiliaires est réalisée au niveau de l'encodage du contenu numérique correspondant au programme de télévision.

La présente invention a pour but d'améliorer la situation.

Un premier aspect de la présente invention propose un procédé de diffusion de contenus numériques à des terminaux dans un réseau comprenant une entité de diffusion de contenus numériques et un serveur stockant des données auxiliaires à associer à au moins un contenu numérique ; au moins une commande de terminal étant diffusée dans ledit contenu numérique ;
ledit procédé comprenant, au niveau d'un terminal appartenant audit réseau :
/a/ la réception d'un contenu numérique diffusé ;
/b/ une extraction de ladite commande de terminal dudit contenu numérique reçu ; et
/c/ une exécution la commande de terminal en requérant auprès dudit serveur les données auxiliaires associées au contenu numérique.

Grâce à ces dispositions, la transmission du contenu numérique peut avantageusement être dé-corrélée de la transmission des données auxiliaires. En effet, d'une part la transmission du contenu numérique est effectuée par une entité de diffusion qui diffuse donc le contenu numérique à tous les terminaux du réseau, et d'autre part, la transmission des données auxiliaires est effectuée à partir du serveur.

Dans une telle architecture, les données auxiliaires sont récupérées au niveau du terminal via une liaison point à point qui permet avantageusement de personnaliser les échanges entre ce serveur et le terminal considéré, et de ce fait permet de personnaliser ces données auxiliaires pour chaque terminal le cas échéant de manière simple. En effet, il est alors par exemple possible de prévoir que le serveur prenne en compte l'identification du terminal qui a émis la requête de données auxiliaires pour déterminer les données auxiliaires à lui envoyer. On peut également prévoir que la requête de données auxiliaires émises depuis le terminal vers le serveur contienne des paramètres, qui peuvent avoir été reçus dans la commande de terminal diffusée avec le programme de télévision. Dans ce cas, le serveur peut prendre en compte une combinaison de ces paramètres avec un identifiant du terminal, afin de déterminer les données auxiliaires qui sont à transmettre à ce terminal.

En procédant ainsi, la diffusion d'un contenu numérique peut être associée à des données auxiliaires de manière flexible. Ainsi, une telle architecture permet d'élargir l'offre des services qui peuvent être proposés aux utilisateurs de manière personnalisée le cas échéant.

En outre, dans un tel contexte, le terminal peut être plus simple que dans l'état de l'art antérieur cité précédemment puisqu'il n'a plus en charge de traiter la réception des contenus numériques multiplexés avec les données auxiliaires qui lui sont associées. Par conséquent, l'application d'un tel procédé peut avantageusement permettre de réduire les coûts attachés à de tels terminaux. Ici, le terminal a simplement en charge la réception et l'affichage des flux de données relatifs au contenu numérique diffusé, et l'extraction de commandes de terminal qui sont diffusées avec ces flux de données. Un tel traitement est simple au regard d'une gestion de multiplexage des programmes de télévision et des données auxiliaires et de l'exécution des applications qui sont commandées par les données auxiliaires. Dans le contexte d'un mode de réalisation de la présente invention, les applications correspondantes sont exécutées sur un serveur et non plus au niveau du terminal.

Une fois que la commande de terminal est extraite du flux de données diffusé, le terminal l'exécute.

Dans un mode de réalisation de la présente invention, le flux de données diffusé comprend au moins une commande de terminal dont l'exécution correspond à l'émission d'une requête de données auxiliaires auprès du serveur.

L'insertion de telles commandes de terminal permet une grande souplesse dans l'adaptation du procédé à différents services que la diffusion multiplexée du flux de données du contenu numérique et des données auxiliaires ne permet pas.

Dans une telle architecture, il est aisé de mettre en oeuvre un service en association avec un contenu numérique diffusé du type d'un programme de télévision, même si ce service correspond à une pluralité d'actions soit au niveau du terminal soit au niveau du serveur.

En effet, on peut avantageusement prévoir de décomposer la mise en oeuvre de ce service en un ensemble d'actions élémentaires successives qui sont destinées à être exécutées au niveau d'un terminal du réseau et/ou au niveau d'un serveur de ce réseau.

Suivant le type de service considéré, une synchronisation plus ou moins fine est requise. En effet, un service visant à surimprimer des sous-titres sur une séquence d'images requiert une synchronisation fine alors qu'un service tel qu'énoncé ci-avant en relation avec une émission de téléachat peut être mis en oeuvre sur la base d'une synchronisation plus approximative. Le contexte de la présente invention permet de s'adapter à de telles différences d'exigences quant à la synchronisation. On peut prévoir que les actions élémentaires issues de la décomposition du service à mettre en oeuvre sont associées à des références temporelles respectives qui dépendent du niveau de précision de la synchronisation requise. Aucune limitation n'est attachée à la présente invention quant au format de ces références temporelles.

Aucune limitation n'est attachée à la présente invention pour le type de réseau dans lequel elle peut être mise en oeuvre.

Dans cette architecture, il est aisé de prévoir une voix de retour pour des services interactifs qui requièrent des réponses des utilisateurs. En effet, cette voix de retour correspond à une liaison point à point avec le serveur.

Dans un mode de réalisation de la présente invention, les données auxiliaires correspondent à un service interactif associé au contenu numérique diffusé et l'exécution de chaque commande diffusée dans le contenu numérique correspond à la mise en oeuvre d'une étape dudit service.

Ainsi, avantageusement on décompose le service en différentes étapes et on diffuse les commandes de sorte à commander la mise en oeuvre de ces étapes via le terminal, soit au niveau du terminal lui-même, soit encore au niveau du serveur.

Le contenu numérique diffusé peut comprendre en outre au moins une autre commande de terminal correspondant à une exécution en local audit terminal. Ainsi, on obtient un procédé de réception flexible.

Dans un mode de réalisation de la présente invention, le contenu numérique et les données auxiliaires sont associées dans le temps, avec une synchronisation plus ou moins précise selon le type de service à mettre en oeuvre. Le terminal et l'entité de diffusion sont alors synchronisés sur une référence temporelle commune et la commande de terminal diffusée est associée à une estampille temporelle qui permet cette association temporelle entre le contenu numérique diffusé et les données auxiliaires.

On peut également prévoir que des données auxiliaires sont en outre reçues au niveau du terminal dans le contenu numérique diffusé. En effet, on peut ainsi conserver avantageusement une compatibilité avec le fonctionnement de certains réseaux existants.

Un deuxième aspect de la présente invention propose un procédé de diffusion de contenus numériques dans un réseau comprenant une entité de diffusion de contenus numériques et un serveur stockant des données auxiliaires à associer à au moins un contenu numérique ;
dans lequel l'entité de diffusion diffuse un contenu numérique et au moins une commande de terminal dans ledit contenu numérique ; ladite commande de terminal commandant à un terminal de requérir auprès du serveur lesdites données auxiliaires à associer au contenu numérique diffusé.

Ce procédé de diffusion peut en outre proposer les mêmes caractéristiques que celles énoncées ci-avant au regard du procédé de réception selon le premier aspect de la présente invention.

Un troisième aspect de la présente invention propose un terminal adapté pour mettre en oeuvre le procédé selon le premier aspect de la présente invention.

Un quatrième aspect de la présente invention propose une entité de diffusion adaptée pour mettre en oeuvre un procédé de diffusion selon le second aspect de la présente invention.

Un cinquième aspect de la présente invention propose un système comprenant un terminal selon le troisième aspect de la présente invention et une entité de diffusion selon le quatrième aspect de la présente invention.

Un sixième aspect de la présente invention propose un programme d'ordinateur pour un terminal, comprenant des instructions aptes à mettre en oeuvre le procédé de réception selon le premier aspect de la présente invention, lors d'une exécution du programme par des moyens de traitement du terminal selon le troisième aspect de la présente invention.

Un septième aspect de la présente invention propose un programme d'ordinateur pour une entité de diffusion, comprenant des instructions aptes à mettre en oeuvre le procédé de diffusion selon le deuxième aspect de la présente invention, lors d'une exécution du programme par des moyens de traitement de l'entité de diffusion.

Un huitième aspect de la présente invention propose un support d'enregistrement lisible par un ordinateur sur lequel est enregistré le programme d'ordinateur selon le sixième ou le septième aspect de la présente invention.

D'autres aspects, buts et avantages de l'invention apparaîtront à la lecture de la description d'un de ses modes de réalisation.

L'invention sera également mieux comprise à l'aide de la description suivante de différents modes de réalisation de la présente invention, en référence aux dessins, sur lesquels :
- la figure 1 illustre un réseau comprenant des terminaux, une entité de diffusion et un serveur selon un mode de réalisation de la présente invention;
- la figure 2 illustre les principales étapes qui, dans un réseau tel qu'illustré en figure 1, sont mises en oeuvre au niveau d'un terminal ;
- la figure 3 illustre un service associé à une émission de télévision selon un mode de réalisation de la présente invention ; et
- la figure 4 illustre une architecture de terminal selon un mode de réalisation de la présente invention.

La présente invention est décrite par la suite dans son application à la diffusion des programmes de télévision à titre d'exemple. Toutefois, il convient de noter qu'aucune limitation n'est attachée à la présente invention quant au type de données diffusées. En effet, on peut aisément appliquer la présente invention dès que l'on souhaite associer dans le temps des données auxiliaires, visant à compléter un flux de données diffusé.

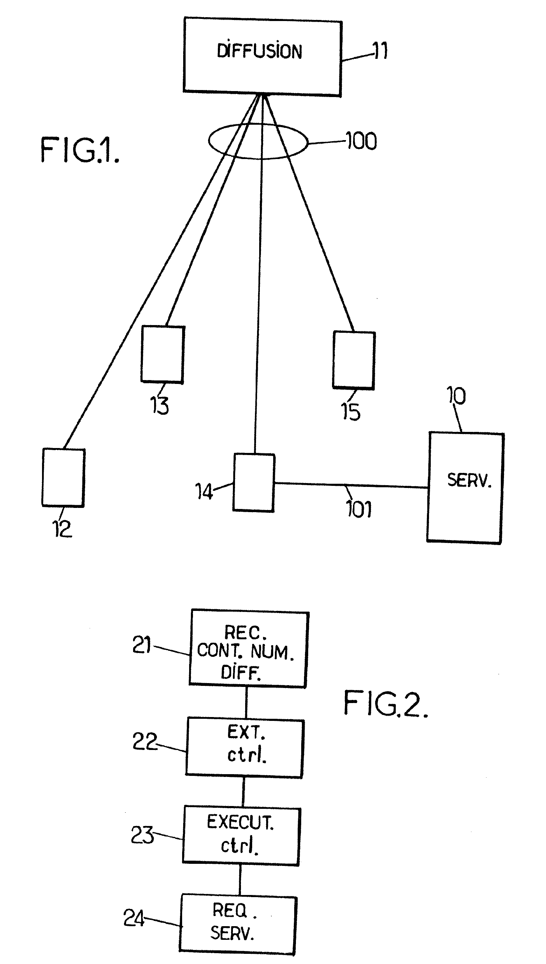

La figure 1 illustre un réseau selon un mode de réalisation de la présente invention. Ce réseau comprend une entité de diffusion 11 adaptée pour diffuser des contenus numériques 100. Dans l'exemple considéré ici, ces contenus numériques correspondent à des programmes de télévision. Par principe, selon une diffusion générale, tous les terminaux 12-15 du réseau reçoivent ces contenus numériques.

Le réseau comprend un serveur 10 adapté pour stocker des données auxiliaires et pour les transmettre à l'un des terminaux sur requête de ce dernier via une liaison point à point 101.

Les terminaux peuvent par exemple être des boîtiers décodeurs récepteurs (en anglais 'Set Top Box').

Dans le cas où seul un serveur 10 est présent dans le réseau, on peut prévoir que les terminaux du réseau connaissent préalablement l'adresse d'accès à ce serveur et qu'il n'est de ce fait pas besoin de transmettre cette adresse dans les commandes insérées dans le flux de données diffusé.

Il est également aisé de prévoir une pluralité de serveurs 10 dans un tel réseau. Dans ce cas, les commandes qui sont insérées dans le flux de données diffusé peuvent comprendre une indication relative à l'adresse à utiliser pour accéder au serveur correspondant à cette commande parmi la pluralité de serveurs que comprend le réseau.

La figure 2 illustre les principales étapes qui, dans un réseau tel qu'illustré en figure 1, sont mises en oeuvre au niveau du terminal 14 par exemple.

Ainsi, à une étape 21, le terminal 14 reçoit un flux de données diffusé dans le réseau correspondant au programme de télévision. Dans ce flux de données sont insérées des informations complémentaires qui correspondent à une ou plusieurs commandes de terminal.

Puis, à une étape 22, le terminal est en charge d'extraire la ou les commandes qui sont diffusées dans le flux de données. Ainsi, à une étape 23, le terminal 14 est en mesure d'exécuter la ou les commandes extraites.

Au moins une commande de terminal diffusée dans le flux de données et reçue par le terminal 14 correspond à une requête à émettre à destination du serveur 10 pour récupérer des données auxiliaires à associer au contenu numérique reçu sous la forme du flux de données.

A une étape 24, le terminal 14 exécute une telle commande qui comprend une étape de récupération de données auxiliaires auprès du serveur 10.

Les commandes de terminal comprises dans le flux de données diffusé peuvent être d'autres types. En effet, elles peuvent aussi correspondre à une exécution en local au terminal. Il en est par exemple ainsi dans le contexte du téléachat lors de la gestion de l'affichage en surimpression d'informations complémentaires. Dans ce cas, le terminal 14 affiche les images du programme de télévision ainsi que des données auxiliaires, récupérées auprès du serveur 10, en surimpression qui correspondent à des informations complémentaires sur l'objet mis en vente. Puis, afin de stopper l'affichage de ces données auxiliaires lorsque l'objet auxquelles elles se rapportent n'est plus à l'écran, une nouvelle commande peut être diffusée dans le flux de données, cette nouvelle commande ne nécessitant pas une relation avec le serveur et pouvant être complètement exécutée en local sur le terminal. On peut aussi prévoir que la commande précédente visant à récupérer les données auxiliaires auprès du serveur, indique également le temps pendant lequel ces données sont à afficher. Dans ce cas, il n'est pas requis la diffusion d'une nouvelle commande pour retirer l'affichage des données auxiliaires, une simple gestion de temporisateur en local sur le terminal est suffisante.

De manière plus générale, des commandes de terminal auxquelles correspond une exécution en local au niveau du terminal peuvent être relatives à la gestion des données auxiliaires récupérées.

Une commande de terminal à exécuter en local peut également correspondre à un changement de chaîne de télévision.

Les commandes de terminal peuvent être relativement basiques comprenant une étape de requête de données auxiliaires auprès d'un serveur et une étape de gestion de l'affichage de ces données auxiliaires.

Elles peuvent aussi être plus sophistiquées lorsque, notamment, elles visent à déclencher des actions de traitement sur le serveur 10. Tel est le cas, par exemple, lorsque le terminal reçoit une commande correspondant à un enregistrement du programme de télévision de manière automatique sur un magnétoscope localisé sur un serveur du réseau.

Dans un mode de réalisation de la présente invention, le protocole de diffusion utilisé dans le réseau est le protocole DVB. Ce protocole définit la diffusion cyclique de tables de signalisation au sein desquelles un opérateur de service peut insérer des descripteurs privés, qui sont libres d'utilisation dans leur contenu. On peut ainsi prévoir d'insérer un descripteur 'Interaction_Information_Descriptor' tel que celui défini par la suite.

Un service à associer au contenu numérique diffusé est décomposé en une pluralité d'actions élémentaires auxquelles correspondent respectivement des commandes de terminal qui peuvent être définies et décrites au sein d'un de ces descripteurs privés.

Le protocole DVB définit différents types de tables SI (pour 'Service Information', en anglais) qui correspondent à des niveaux différents de gestion de la diffusion (tables 'MPEG2/DVB-Sl'). Ainsi, certaines de ces tables sont associées au niveau de la gestion d'une chaîne de télévision, comme les tables de types SDT (pour 'Service Description Table'), alors que d'autres sont associées au niveau de la gestion d'une émission de télévision, comme les tables de type EIT (pour 'Event Information Table').

En fonction du service à mettre en oeuvre en association à un contenu numérique, les commandes de terminal correspondant à ce service peuvent être transportées au sein de tables de différents types.

Lorsqu'une commande est relative à une émission, elle est de préférence transportée dans une table de type EIT et lorsqu'elle est relative à une chaîne de télévision, elle est de préférence transportée dans une table de type SDT. Chaque instance de ce descripteur "Interaction_Information_Descriptor" décrit une commande. Ainsi, lorsque les commandes insérées dans le flux diffusé sont relatives à un programme de télévision particulier, elles peuvent être insérées dans une table EIT.

Dans un mode de réalisation de la présente invention, un tel descripteur a une structure modulable et évolutive qui permet une grande souplesse et une adaptation aisée à la mise en oeuvre de services d'une grande variété.

Une syntaxe d'un tel descripteur 'Interaction_Information_Descriptor' est présentée dans la table ci-dessous.

**Table 1**

| | | | | |
|---|---|---|---|---|
| **Descriptor_id** | | | | Ce champ (8 bits) identifie le descripteur. |
| Descriptor_length | | | | Ce champ (8 bits) spécifie le nombre d'octets restant dans le descripteur. |
| Command_ID | | | | Ce champ (16 bits) donne un identifiant de commande de terminal. |
| Command_type | | | | Ce champ (8 bits) donne le type d'action associée à la commande de terminal. Sa structure est celle de la table de type de commande, décrite ci-après. |
| repetition_code | | | | Ce champ (2 bits) a une structure décrite dans la table de code de répétition, décrite ci-après. |
| Action_time_code | | | | Ce champ (3 bits) indique quand exécuter une action associée à une commande de terminal. Il présente une structure décrite dans la table de code de temps, décrite ci-après. |
| In_band_data | | | | Lorsque ce champ (1 bit) indique la valeur "1", des données auxiliaires sont transmises dans un flux de données diffusé et lorsqu'il indique la valeur "0", les données auxiliaires sont obtenues par une liaison point à point. |
| URL_indicator | | | | Lorsque ce champ (1 bit) indique la valeur "1", une adresse URL d'une page à afficher est fournie. Cela signifie que le champ url_length existe. |
| parameters_indicator | | | | Lorsque ce champ (1 bit) indique la valeur "1 ", le descripteur contient une boucle de paramètres à envoyer au serveur interactif avec l'adresse URL. |
| Lorsque le champ action_time_code indique la valeur 001 { | | | | |
| | component_tag | | | Ce champ (8 bits) identifie le flux élémentaire qui contient une référence temporelle (en anglais 'Presentation Time Stamp' ou 'PTS'). |
| | Pts_action_time | | | Ce champ (32 bits) indique le moment de l'exécution de l'action dans le format PTS. Le PTS de référence existe dans le flux élémentaire (ou en anglais, 'Packetized Elementary Stream' ou 'PES') déduit à partir du champ précédent, le champ 'component_tag'. |
| } | | | | |
| Lorsque le champ action_time_code indique la valeur 010 { | | | | |
| UTC_actian_time | | | | Ce champ (32 bits) représente le moment d'exécution de l'action signallée par la commande de terminal. |
| } | | | | |
| Lorsque le champ In_band_data indique la valeur 1{ | | | | |
| | | In_band_data () | | La structure de ce champ est décrite dans la table in_band_data, exposée ci-après. |
| | | } | | |
| Lorsque le champ url_indicator indique la valeur 1 { | | | | |
| | | URL length | | Ce champ (8 bits) est présent si la valeur du champ url_indicator est positionnée à 1. Ce champ donne la longueur de l'adresse URL en octets. |
| | | Pour (i=0; <N, i++) { | | |
| | | | URL_char | Ce champ définit l'ensemble d'octets constituant l'adresse URL. |
| | | } | | |
| } | | | | |
| Lorsque le champ parameters_indicators indique 1 { | | | | |
| Parameters_number | | | | Ce champ (8 bits) spécifie le nombre de |
| | | | | paramètres associés à l'adresse URL. Il existe seulement si la valeur du champ parameters_indicator est positionnée à 1. |
| | for (i=0; <N, i++) { | | | |
| Parameter_length | | | | Ce champ spécifie la longueur du paramètre suivant. |
| | | | for (i=0; <N1, i++) { | |
| | | | Param_char | Ce champ (8 bits) définit l'ensemble d'octets constituant le paramètre. |
| | | | } | |
| | } | | | |
| } | | | | |
| selector_byte_length | | | | Ce champ donne la longueur de la structure suivante Selector_Byte. La valeur "0" indique que la structure n'est pas présente. |
| for (i=0; 1<selector_byte_length; i++){ | | | | |
| | selector_byte | | | Ce champ (8 bits) présente une structure qui change en fonction du type d'action défini par le champ 'Command_type'. |
| } | | | | |
| } // end | | | | |

Il convient de noter que ce descripteur comprend avantageusement un identifiant de commande dans le champ 'Command-ID' qui permet d'identifier de façon unique chaque commande pour un service donné et le type de commande dans le champ 'Command-type' qui indique le type de traitement ou d'action associée à chacune de ces commandes.

La table suivante propose une liste, non exhaustive des actions qui peuvent être attachées aux commandes de terminal diffusées, dans un mode de réalisation de la présente invention.

**Table 2**

| **Commande_type** | **Nom** | **explications** |
|---|---|---|
| 0x00 | Null | Cette commande peut être utilisée pour transporter l'heure de référence lorsque le temps des événements est exprimé en nombre de tics d'horloge. |
| 0x01 | Start interactivity | Cette commande indique le début d'un service avec surimpression d'informations sur les images du flux de données diffusé. |
| 0x02 | Stop interactivity | Cette commande indique au terminal qu'il peut désactiver le service. |
| 0x03 | display page | Cette commande indique au terminal de réquérir une page sur un serveur qui correspond à l'adresse URL indiquée dans le descripteur. |
| 0x04 | close page | Cette commande indique au terminal de fermer une page déjà chargée à partir d'un serveur. |
| 0x05 | display message | Cette commande indique d'afficher des données auxiliaires qui se trouvent dans le flux de données diffusé. |
| 0x06 | close message | Cette commande indique de stopper l'affichage d'un message déjà chargé à partir d'un flux diffusé. |
| 0x07 | Start record | Cette commande indique de déclencher un enregistrement. |
| 0x08 | Stop record | Cette commande indique d'arrêter un enregistrement. |
| 0x09 | Load page in cache | Cette commande indique de charger en cache une page à partir d'un serveur selon l'adresse URL. |
| OxA | Identify content | Cette commande indique l'identification d'un contenu numérique ou d'une émission. |
| 0x0B | Identify sequence | Cette commande indique une identification d'un passage au sein d'un contenu numérique, même si celui-ci est déjà identifié, comme par exemple l'identification d'une pause publicitaire dans une émission. |
| 0x0C - 0xDF | reserved for future use | Ces commandes sont à définir. |
| 0xE0 - 0xFF | user defined | On peut prévoir de réserver ces valeurs à une utilisation privée. |

Il convient de noter que, par la présence de la commande 'display message', il est prévu de recevoir des données auxiliaires qui sont reçues dans le flux de données diffusé, c'est-à-dire qui sont multiplexées dans le flux de données comme dans l'art antérieur décrit ci-avant.

Il peut être avantageux de prévoir de répéter une commande pour diverses raisons, notamment afin d'en garantir la réception par le terminal, ou encore pour envoyer des commandes par anticipation et préparer ainsi le terminal avant son exécution, ou bien pour indiquer une période de validité d'une commande. On peut gérer la répétition de certaines de ces commandes de terminal via une table de code de répétition, telle que celle présentée ci-dessous :

**Table 3**

| **Repetition_code** | **Signification** |
|---|---|
| 00 | Cette valeur correspond à une anticipation. En effet, elle signifie qu'il ne faut pas exécuter la commande de terminal reçue mais se préparer à son exécution ultérieur (lors de la réception d'un des autres codes de "repetition_code" listés cio-dessous). |
| 10 | Cette valeur indique que la commande de terminal est émise pour la première fois. Dans ce cas, elle est exécutée. |
| 01 | Cette valeur indique la dernière émission de la commande de terminal. |
| 11 | Cette valeur correspond à une répétition de la commande qui doit être exécutée seulement si aucune commande avec le même identifiant de commande n'a été reçue et exécutée avant. |

On peut prévoir d'exprimer une synchronisation entre les flux de données diffusés et l'exécution des commandes de terminal diffusées selon différents formats dans une table de temps d'exécution (en anglais, 'action_time code'), telle que celle présentée ci-dessous.

**Table 4**

| **Action_time_code** | **Signification** |
|---|---|
| 000 | Ce code indique qu'il n'y a pas de code de temps associé. Tel est le cas pour les événements de type identification du contenu numérique. |
| 001 | Ce code indique une estampille temporelle (ou 'PTS' pour 'Presentation Time Stamp' en anglais). Le PTS est exprimé en nombre de tics d'horloge. |
| 010 | Ce code peut être utilisé lorsque le codeur côté transmission et le décodeur côté terminal sont synchronisés par GPS (pour 'Global Positioning System' en anglais). |
| 100 | Réservé pour un usage futur |
| 101 | Réservé pour un usage futur |
| 110 | Réservé pour un usage futur |
| 111 | Ce code est utilisé pour commander une exécution immédiate de la commande de terminal. |

La structure du champ In_band_data existe si la valeur du champ In_band_data est positionnée à 1. Cette structure peut être telle que celle présentée dans la table suivante :

**Table 5**

| **In_band__data** { | |
|---|---|
| If_ip_address { | Ce champ (1 bit) permet de préciser si les données auxiliaires sont diffusées dans un flux IP sur un réseau Broadband. |
| Reserved | Réservé (7 bits) |
| IP address | Ce champ (32 bits) spécifie une adresse IPv4 unicast/multicast/broadcast. |
| Port_number | Ce champ (8 bits) fournit le numéro de port associé à l'adresse IP. |
| } | |
| original_network_id. | Ce champ (16 bits) identifie le réseau d'origine. |
| transport_stream_id | Ce champ (16 bits) identifie le numéro du flux de transport (ou en anglais 'transport stream'). |
| Service_id | Ce champ (16 bits) permet d'identifier le service transporté dans les données. |
| Component_tag | Ce champ (8 bits) correspond à un identifiant du transport du service utilisé dans le flux de données. |
| } | |

Un tel descripteur permet de mettre en oeuvre un procédé selon la présente invention en décomposant le service à associer au flux de données diffusé en une pluralité de commandes de terminal auxquelles sont associées les moments d'exécution de ces commandes en relation avec la séquence d'images correspondant au flux de données diffusé.

Dans les sections suivantes, un tel procédé de diffusion est décrit dans son application à un service tel qu'un jeu interactif de type Quiz dans lequel un téléspectateur peut jouer en même temps que les invités qui sont sur le plateau de télévision.

Un message d'invitation à participer au jeu est affiché selon un mode de réalisation de la présente invention. Les téléspectateurs ayant répondu à cette invitation sont avertis du début et de la fin de chaque question et sont invités à répondre à ces questions.

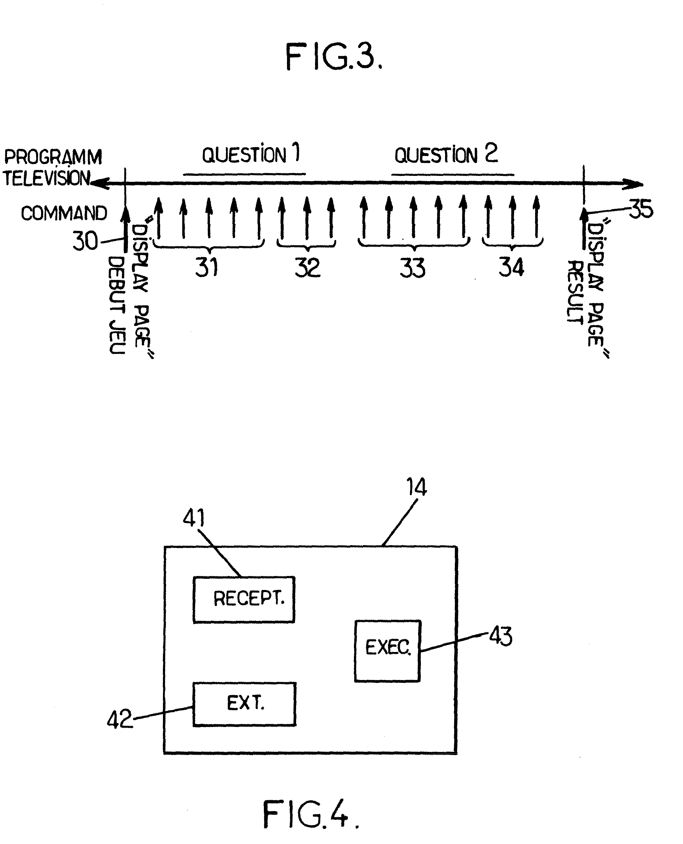

La figure 3 illustre les commandes qui sont diffusées dans le flux de données correspondant à la diffusion d'une émission d'un tel jeu.

Un descripteur "Interaction_Information_Descriptor" est inséré dans la table EIT relative à l'émission de télévision en question. Ce descripteur comporte une commande de type "display page" 31 pour la question 1 et 32 pour la question 2. Dans ce mode de réalisation, afin de garantir la réception de la commande, cette dernière est diffusée plusieurs fois.

Au niveau du terminal, l'exécution de la commande de type "display page" 30 consiste à requérir une page sur un serveur, cette page correspondant à la page d'accueil du jeu en cours de diffusion. L'adresse URL qui permet de se connecter sur le serveur correspondant est fournie également dans le descripteur.

Au cours de l'avancement du jeu, un nouveau descripteur "Interaction_Information_Descriptor" est inséré au début de chaque question pour commander l'affichage de la page correspondante, et un autre est inséré à la fin de chaque question pour commander la fermeture de la page correspondante. Le terminal requiert la page relative à chaque question selon l'adresse URL fournie dans le descripteur correspondant.

La commande de type "close page" 35 signalée par les descripteurs à la fin des questions permet de fermer la page relative à la question considérée et d'arrêter ainsi la possibilité de répondre aux questions. A la fin du jeu, l'adresse URL envoyée dans le descripteur de fin concerne la page qui affiche les résultats obtenus par l'utilisateur.

A partir de cet exemple, il est aisé de déduire des applications diverses d'un mode de réalisation de la présente invention.

La figure 4 illustre une architecture de terminal 14 selon un mode de réalisation de la présente invention.

Un tel terminal comprend une unité de réception 41 adaptée pour recevoir un contenu numérique diffusé, une unité d'extraction 42 adaptée pour extraire cette commande de terminal du contenu numérique reçu, et une unité d'exécution 43 adaptée pour exécuter la commande de terminal en requérant auprès du serveur les données auxiliaires associées au contenu numérique.

## Revendications

1. Procédé de réception de contenus numériques au niveau d'un terminal d'un utilisateur (14) dans un réseau comprenant une entité de diffusion (11) de contenus numériques et un serveur (10) stockant des données auxiliaires à associer à au moins un contenu numérique ; au moins une commande de terminal étant diffusée dans ledit contenu numérique ;
ledit procédé comprenant les étapes suivantes, au niveau dudit terminal:
/a/ la réception (21) d'un contenu numérique diffusé ;
/b/ une extraction (22) de ladite commande de terminal dudit contenu numérique reçu ; et
/c/ une exécution (23, 24) de la commande de terminal en requérant auprès dudit serveur les données auxiliaires associées au contenu numérique ;
les données auxiliaires correspondant à un service interactif, qui requiert des réponses de l'utilisateur par une voie de retour vers le serveur et qui est associé au contenu numérique diffusé.

2. Procédé de réception de contenus numériques selon la revendication 1, comprenant en outre l'étape suivante, après l'étape /c/ :
/d/ envoi d'une réponse de l'utilisateur audit serveur.

3. Procédé de réception de contenus numériques selon la revendication 1 ou 2, dans lequel le service interactif est décomposé en différentes étapes, et
dans lequel l'exécution de chaque commande diffusée dans le contenu numérique correspond à la mise en oeuvre d'une étape dudit service interactif.

4. Procédé de diffusion de contenus numériques dans un réseau comprenant une entité de diffusion (11) de contenus numériques et un serveur (10) stockant des données auxiliaires à associer à au moins un contenu numérique ;
dans lequel l'entité de diffusion diffuse un contenu numérique et au moins une commande de terminal dans ledit contenu numérique ;
ladite commande de terminal commandant à un terminal d'un utilisateur de requérir auprès du serveur lesdites données auxiliaires à associer au contenu numérique diffusé ;
les données auxiliaires correspondant à un service interactif qui requiert des réponses de l'utilisateur par une voie de retour vers le serveur, et qui est associé au contenu numérique diffusé.

5. Procédé de diffusion selon la revendication 4, dans lequel le contenu numérique diffusé comprend en outre au moins une autre commande de terminal correspondant à une exécution en local audit terminal.

6. Procédé de diffusion selon la revendication 4 ou 5 , dans lequel le terminal et l'entité de diffusion sont synchronisés sur une référence temporelle commune et dans lequel la commande de terminal diffusée est associée à une estampille temporelle qui permet une association temporelle entre le contenu numérique diffusé et les données auxiliaires.

7. Procédé de diffusion selon l'une quelconque des revendications 4 à 6,
dans lequel des données auxiliaires sont en outre diffusées dans le contenu numérique diffusé.

8. Terminal (14) d'un utilisateur dans un réseau comprenant une entité de diffusion (11) de contenus numériques et un serveur (10) stockant des données auxiliaires à associer à au moins un contenu numérique ;
au moins une commande de terminal étant diffusée dans ledit contenu numérique ;
ledit terminal comprenant :
- une unité de réception (41) adaptée pour recevoir un contenu numérique diffusé ;
- une unité d'extraction (42) adaptée pour extraire ladite commande de terminal dudit contenu numérique reçu ; et
- une unité d'exécution (43) adaptée pour exécuter la commande de terminal en requérant auprès dudit serveur les données auxiliaires associées au contenu numérique ;
les données auxiliaires correspondant à un service interactif qui requiert des réponses de l'utilisateur par une voie de retour vers le serveur et qui est associé au contenu numérique diffusé.

9. Entité de diffusion (11) à des terminaux (12-15) d'utilisateurs respectifs de contenus numériques dans un réseau comprenant en outre un serveur stockant des données auxiliaires à associer à au moins un contenu numérique ; ladite entité de diffusion étant adaptée pour diffuser à de terminaux (12-15) un contenu numérique et au moins une commande de terminal dans ledit contenu numérique ;
ladite commande de terminal commandant à un terminal de requérir auprès du serveur lesdites données auxiliaires à associer au contenu numérique diffusé ;
les données auxiliaires correspondant à un service interactif qui requiert des réponses de l'utilisateur par une voie de retour vers le serveur et qui est associé au contenu numérique diffusé.

10. Système de diffusion de contenus numériques comprenant des terminaux (12-15) selon la revendication 8 et une entité de diffusion (11) selon la revendication 9.

11. Serveur dans un réseau comprenant en outre une entité de diffusion (11) de contenus numériques et un terminal (14) d'un utilisateur ;
ledit serveur (10) stockant des données auxiliaires à associer à au moins un contenu numérique diffusé par ladite entité de diffusion et étant adapté pour :
- recevoir, depuis le terminal, une requête des données auxiliaires à associer à un contenu numérique reçu par le terminal ; et
- transmettre audit terminal lesdites données auxiliaires requises ;
les données auxiliaires correspondant à un service interactif qui requiert des réponses de l'utilisateur par une voie de retour vers le serveur et qui est associé au contenu numérique diffusé.

12. Programme d'ordinateur pour un terminal (14) d'un utilisateur, comprenant des instructions aptes à mettre en oeuvre le procédé de réception selon l'une quelconque des revendications 1 à 3, lors d'une exécution du programme par des moyens de traitement du terminal.

13. Programme d'ordinateur pour une entité de diffusion (11), comprenant des instructions aptes à mettre en oeuvre le procédé de diffusion selon l'une quelconque des revendications 4 à 7, lors d'une exécution du programme par des moyens de traitement de l'entité de diffusion.
